# EUROPEAN PATENT APPLICATION

(11) **EP 4 311 283 A1**
(43) Date of publication of application: **24.01.2024**
(21) Application number: 21931567.8
(22) Date of filing: 18.03.2021
(51) Int. Cl.: H04W 8/00, H02J 7/00, H04W 84/10

(54) **STORAGE BATTERY SYSTEM**

(71) Applicant: KABUSHIKI KAISHA TOSHIBA, Minato-ku Tokyo 105-0023 (JP)
(72) Inventor: YOSHIKAWA, Tomohide, Tokyo 105-0023 (JP); KURODA, Kazuto, Tokyo 105-0023 (JP); KIKUCHI, Yusuke, Tokyo 105-0023 (JP); ASAMI, Kota, Tokyo 105-0023 (JP); SUZUKI, Shin, Tokyo 105-0023 (JP)
(74) Representative: AWA Sweden AB
(86) International application number: PCT/JP2021/011193
(87) International publication number: WO 2022/195820

(57) **Abstract**

A storage battery system according to an embodiment that shortens a standby time at the time of activation or maintenance comprises a plurality of storage battery modules(MDL), each comprising an assembled battery (BT), a first wireless communication module (20) configured to transmit and receive radio waves based on a BLE standard, and a battery monitoring unit (C2) configured to control operation of the first wireless communication module(20); and a battery management unit (BMU) comprising a plurality of second wireless communication modules (10, 11) configured to transmit and receive radio waves based on the BLE standard and an arithmetic processing device (C1), wherein a first identifier is preset in the first wireless communication module (20), and when a connection is started, the first wireless communication module (20) in which a value of a second identifier included in an advertising packet transmitted from the second wireless communication module (10, 11) is a value of the first identifier becomes a broadcaster and transmits the advertising packet.

## Description

### FIELD

Embodiments described herein relate generally to a storage battery system.

### BACKGROUND

A storage battery system in which a plurality of storage battery modules are combined is used for various purposes. For example, in a storage battery system including a large number of storage battery modules, when wired communication is performed between the storage battery modules and a management device, a labor cost for wiring communication lines is required, and there is also a risk of wiring disruption. In addition, wiring of communication lines is required in accordance with the number of storage battery modules, and the configuration of the storage battery system may become complicated. For this reason, in recent years, for the purpose of simplifying the configuration of the storage battery system and for other purposes, studies have been made to make communication between the storage battery modules and the management device wireless by using radio waves.

Each of the storage battery modules has a monitoring circuit for measuring the voltage and the temperature of the battery and a communication module. When the storage battery module is not connected by wire, the monitoring circuit and the communication module obtain power from the battery mounted on the storage battery module. Since it is preferable that the energy stored in the battery be efficiently supplied to the load, it is required to suppress the energy consumption in the monitoring circuit and the communication module to a low level.

As a wireless communication standard with low power consumption, for example, Bluetooth (registered trademark) Low Energy (BLE) is known. In BLE, a band of 2.400 GHz to 2.480 GHz is divided into 40 channels (ch) for communication. Three channels included in the 40 channels are respectively used as an advertising channel for discovery of a communication partner, network participation control, and broadcasting. The remaining 37 channels are used for data transmission after a connection is completed.

In an assumed storage battery system using BLE, first, a battery management device serving as a master of wireless communication discovers a storage battery module serving as a slave as a communication partner using an advertising channel, and completes connection. When the connection is completed, communication is started between the master and the slave.

### CITATION LIST

PATENT LITERATURE 1
Jpn. Pat. Appln. KOKAI Publication No. 2019-75742

### SUMARRY

In a storage battery system using BLE, a communication module first discovers a communication partner using an advertising channel and completes a connection. When the connection is completed, communication is started between a master and a slave. In the BLE standard, there is no specification for adjusting an advertising packet. For example, in a large-scale storage battery system including several hundred storage battery modules, since each storage battery module attempts transmission at a random timing, it is expected that a large number of advertising packets will be concentrated on three channels, collision will occur with a high probability, and connection will fail a plurality of times. Therefore, there has been a possibility that the storage battery system cannot be operated until communication is established between all the monitoring circuits and the management device, and it may take a long time until the storage battery system is operated.

Although the number of slave devices connected to a single master device is not practically limited in the BLE standard, there is a case where a BLE SoC (System on Chip) has a limitation on the number of connected slave devices. Therefore, for example, in a system such as a large-scale battery system in which management of a large number of slaves is required, a multi-master configuration in which a plurality of master devices are mounted is required.

An embodiment of the present invention has been made in view of the above-described circumstances, and an object thereof is to provide a storage battery system that shortens a standby time at the time of activation or maintenance.

A storage battery system according to an embodiment comprises a plurality of storage battery modules, each comprising an assembled battery including a plurality of battery cells, a first wireless communication module configured to transmit and receive radio waves based on a BLE standard, and a battery monitoring unit configured to control operation of the first wireless communication module; and a battery management unit comprising a plurality of second wireless communication modules configured to transmit and receive radio waves based on the BLE standard and an arithmetic processing device configured to control operation of the plurality of second wireless communication modules, wherein a first identifier is preset in the first wireless communication module, and when a connection is started between the second wireless communication module and the first wireless communication module, the first wireless communication module in which a value of a second identifier included in an advertising packet transmitted from the second wireless communication module is a value of the first identifier becomes a broadcaster and transmits the advertising packet.

### BRIEF DESCRIPTION OF THE DRAWINGS

FIG. 1 is a diagram schematically illustrating a configuration example of a storage battery system according to an embodiment.
FIG. 2 is a diagram for explaining an example of an operation performed when a battery management unit and a storage battery module establish a connection in the storage battery system of the embodiment.
FIG. 3 is a flowchart illustrating an example of an operation of establishing a connection between the battery management unit and the storage battery module in the storage battery system according to the embodiment.
FIG. 4 is a diagram for explaining an example of an operation of changing a group of wireless communication modules of a storage battery module in the storage battery system according to the embodiment.
FIG. 5 is a flowchart illustrating an example of an operation of changing a group of wireless communication modules of a storage battery module in the storage battery system according to the embodiment.

### DETAILED DESCRIPTION

Hereinafter, a storage battery system of an embodiment is described in detail with reference to the drawings.

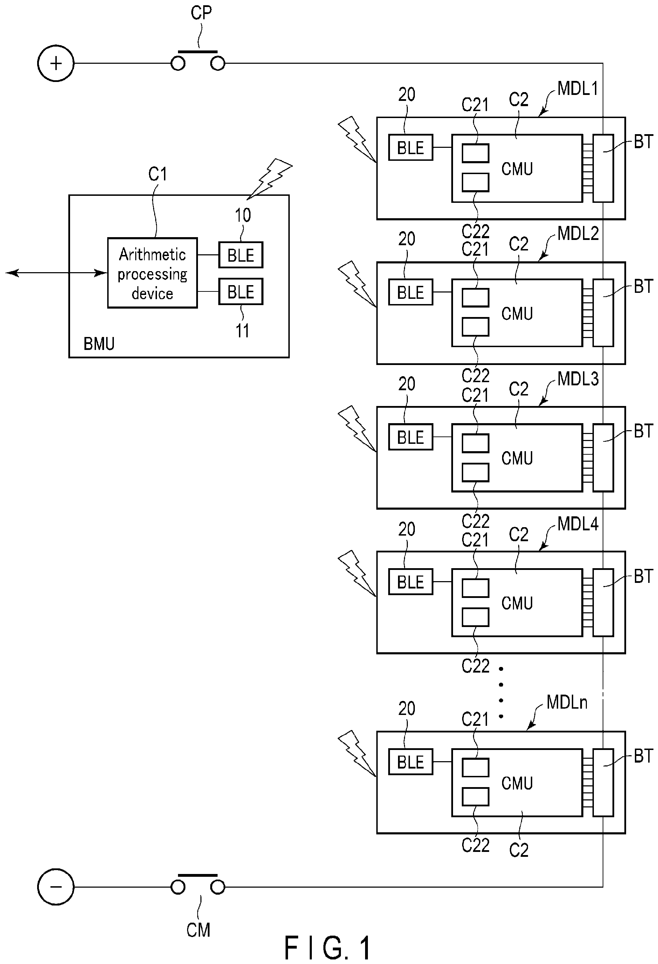

FIG. 1 is a diagram schematically illustrating a configuration example of a storage battery system according to an embodiment. The storage battery system according to the present embodiment includes a plurality of storage battery modules MDL1 to MDLn, a battery management unit (BMU) BMU, a first contactor CP, and a second contactor CM. Note that the battery system may include a plurality of battery management units BMU.

Each of the storage battery modules MDL1 to MDLn includes an assembled cell BT that includes a plurality of cells, a cell monitoring unit (CMU) C2, and a wireless communication module (first wireless communication module) 20.

The storage battery module MDL1 is arranged on the highest potential side, and the storage battery module MDLn is arranged on the lowest potential side. The storage battery modules MDL1 to MDLn are electrically connected in such a manner that the assembled batteries BT are connected in series, for example.

The assembled battery BT includes, for example, a plurality of battery cells of lithium ion batteries connected in series or in parallel.

The operation of the wireless communication module 20 is controlled by, for example, an arithmetic processing device C22, which is described later, and the wireless communication module 20 can perform communication (transmission and reception) with the battery management unit BMU by radio waves. In the storage battery system according to the present embodiment, the wireless communication module 20 can communicate with one of the plurality of wireless communication modules (including a first master 10 and a second master 11) included in the battery management unit BMU based on the BLE standard.

An identifier (first identifier) is assigned to the wireless communication module 20 in advance. The plurality of wireless communication modules 20 are grouped by the assigned identifiers. For example, when an advertising packet including an identifier (second identifier) is transmitted from the battery management unit BMU, the wireless communication module 20 performs an operation according to the received identifier. For example, when the value of the identifier (second identifier) included in the advertising packet is the same as the value of the assigned identifier (first identifier), the wireless communication module 20 changes from an observer to a broadcaster.

For example, when an identifier of a predetermined value (for example, "0") is included in the advertising packet, all the wireless communication modules 20 that are observers may be set to become broadcasters. In this case, it is desirable that the value of the identifier included in the advertising packet be different from the value used for grouping the plurality of wireless communication modules 20.

The cell monitoring unit C2 includes a measurement circuit C21 that detects the voltage of each of the plurality of cells and the temperature of at least one location of the assembled cell BT, and an arithmetic processing device C22. The cell monitoring unit C2 can periodically transmit measured values of the voltage and the temperature to the battery management unit BMU via the wireless communication module 20.

The arithmetic processing device C22 controls the operation of the wireless communication module 20 on the basis of a control signal received from the battery management unit BMU via the wireless communication module 20. The arithmetic processing device C22 performs equalization (cell balancing) of voltages of the plurality of cells based on the control signal received from the battery management unit BMU via the wireless communication module 20.

The arithmetic processing device C22 may be configured by, for example, hardware, software, or a combination of hardware and software. The arithmetic processing device C22 is a circuit that includes, for example, at least one processor such as a central processing unit (CPU) or a micro processing unit (MPU), and a memory in which a program executed by the processor is recorded, and realizes various functions of the storage battery modules MDL1 to MDLn by software.

The first contactor CP is interposed in a main circuit that connects the high-potential-side terminal of the storage battery module MDL1 to the positive electrode terminal of the storage battery system, and can switch the electrical connection between the plurality of storage battery modules MDL1 to MDLn and the positive electrode terminal. The operation of opening and closing the contact point by the first contactor CP is controlled by a control signal from the battery management unit BMU.

The second contactor CM is interposed in a main circuit that connects the low-potential-side terminal of the storage battery module MDLn and the negative terminal of the storage battery system, and can switch the electrical connection between the plurality of storage battery modules MDL1 to MDLn and the negative terminal. The operation of opening and closing the contact point by the second contactor CM is controlled by a control signal from the battery management unit BMU.

The battery management unit BMU includes a plurality of second wireless communication modules (including a first master 10 and a second master 11) and an arithmetic processing device C1.

The arithmetic processing device C1 includes a communication circuit (not shown) capable of performing wired communication with, for example, a host device (not shown). The arithmetic processing device C1 can receive various control signals from the host device and control the operations of the plurality of cell monitoring units C2, the first contactor CP, and the second contactor CM based on the received information.

The arithmetic processing device C1 periodically receives the detected values of the voltages of the plurality of cells and the detected value of the temperature of the assembled battery BT from each of the plurality of cell monitoring units C2, and periodically receives the detected value of the current flowing through the assembled batteries BT from a current sensor (not shown) provided in the main circuit. The battery management unit BMU can calculate, for example, a state of charge (SOC) and a state of health (SOH) of the assembled battery BT (or the battery cells) based on the received values.

The arithmetic processing device C1 monitors the voltages of the plurality of cells and the currents flowing through the plurality of assembled batteries BT, and controls the cell monitoring unit C2 so as to equalize the voltages of the plurality of cells. For example, the battery management unit BMU controls the operation of the storage battery system so that the battery cells do not enter an abnormal state, such as overcharge or overdischarge.

The arithmetic processing device C1 may be configured by hardware, software, or a combination of hardware and software. The arithmetic processing device C1 may include, for example, at least one processor and a memory storing a program to be executed by the processor.

Operations of the second wireless communication modules 10 and 11 are controlled by the arithmetic processing device C1, and the second wireless communication modules 10 and 11 perform communication (transmission and reception) by radio waves with the wireless communication modules 20 of the plurality of cell monitoring units C2. In the storage battery system of the present embodiment, the second wireless communication modules 10 and 11 communicate with the wireless communication modules 20 of the plurality of cell monitoring units C2 based on the BLE standard.

Next, an example of an operation of performing communication between the battery management unit BMU and the plurality of storage battery modules MDL1 to MDLn in the storage battery system of the present embodiment is described.

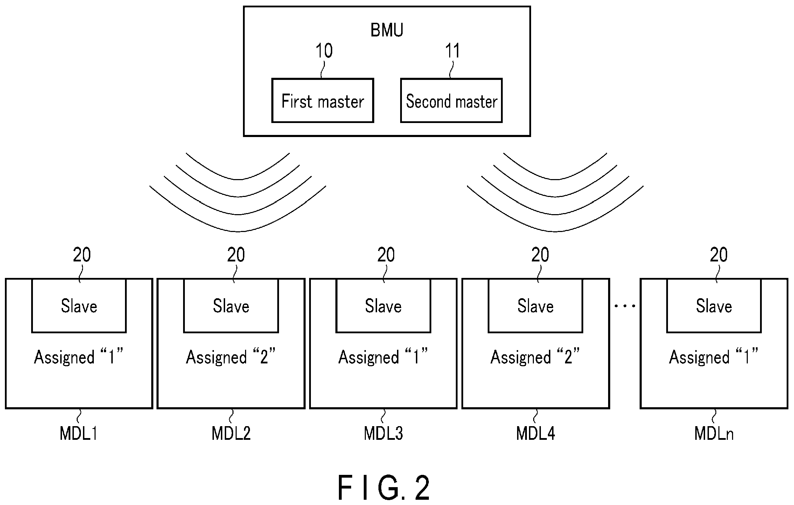

FIG. 2 is a diagram for explaining an example of an operation performed when a battery management unit and a storage battery module establish a connection in the storage battery system of the embodiment.

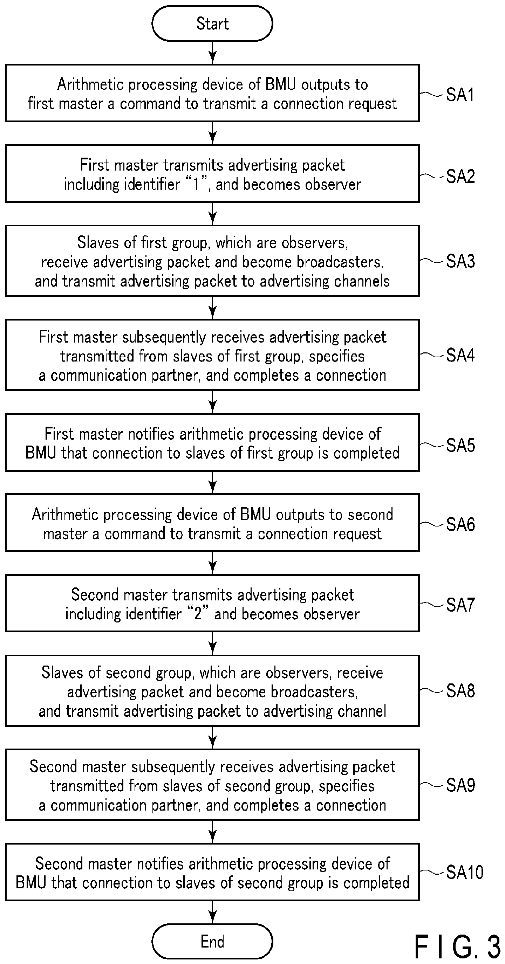

FIG. 3 is a flowchart illustrating an example of an operation of establishing a connection between the battery management unit and the storage battery module in the storage battery system according to the embodiment.

Herein, the second wireless communication modules 10 and 11 of the battery management unit BMU serve as a master, and the wireless communication module 20 of the storage battery modules MDL1 to MDLn serves as a slave. In the following description, it is assumed that the battery management unit BMU includes two wireless communication module masters, namely a first master 10 and a second master 11.

When establishing a connection is started between the battery management unit BMU and the storage battery modules MDL1 to MDLn, the second wireless communication modules 10 and 11 are a broadcaster and the wireless communication module 20 is an observer.

The wireless communication module (slave) 20 has an identifier set in advance (for example, at the time of shipment) so as to respond only to an advertising packet from a specific master device. In the present embodiment, for example, either one of the identifiers "1" or "2" is set to each of the wireless communication modules 20, and the wireless communication modules 20 are grouped into two groups by the identifiers.

In the present embodiment, the wireless communication modules 20 of the storage battery modules MDL1, MDL3, .. ., MDLn are assigned in advance with the identifier "1" and are hereinafter referred to as slaves of the first group. The wireless communication modules 20 of the storage battery modules MDL2, MDL4, ..., MDL(n-1) are assigned in advance with the identifier "2" and are hereinafter referred to as slaves of the second group.

For example, when the arithmetic processing device C1 of the battery management unit BMU outputs a command to transmit a connection request to the first master 10 (step SA1), the first master 10 transmits an advertising packet including the identifier "1" and becomes an observer (step SA2).

When the slaves of the first group receive the advertising packet including the identifier "1", the slaves being observers become broadcasters and transmit an advertising packet to the three advertising channels at predetermined intervals (step SA3). At this time, the slaves of the second group do not respond to the advertising packet including the identifier "1", and they remain as observers.

The first master 10 of the battery management unit BMU sequentially receives the advertising packets transmitted from the slaves of the first group, specifies a communication partner by the advertising packets, and completes a connection (step SA4). For example, the first master 10 can complete a connection by receiving the advertising packets from all the slaves included in the first group.

The first master 10 notifies the arithmetic processing device C1 that a connection with the slaves of the first group has been completed (step SA5).

Upon receipt of the notification from the first master 10, the arithmetic processing device C1 outputs a command to the second master 11 to execute the connection request (step SA6). The second master 11 transmits an advertising packet including the identifier "2" and becomes an observer (step SA7).

When a slave of the second group receives the advertising packet including the identifier "2", the slave changes from an observer to a broadcaster and transmits an advertising packet to the three advertising channels at predetermined intervals (step SA8). At this time, the slave of the first group does not respond to the advertising packet including the identifier "1", and the state of the observer is maintained.

The second master 11 sequentially receives the advertising packets transmitted from the slaves of the second group, specifies a communication partner by the advertising packets, and completes a connection (step SA9). The second master 11 can complete a connection by, for example, receiving advertising packets from all the slaves included in the second group.

The second master 11 notifies the arithmetic processing device C1 that the connection with the slave of the second group has been completed (step SA10).

As described above, since the plurality of wireless communication modules 20 transmit the advertising packets in units of groups, it is possible to reduce the number of advertising packets transmitted at a time, reduce the probability of collision between the advertising packets, and improve the probability of success of a connection. In addition, it is possible to reduce the probability of collision between the advertising packet when each of the second wireless communication modules 10 and 11 makes a connection request and the advertising packet of the wireless communication module 20, and it is possible to improve the probability of successful connection.

As a result, it is possible to reduce a length of time until the connection is established between the battery management unit BMU and the storage battery modules MDL1 to MDLn in the storage battery system.

Next, an example of an operation of changing a group of wireless communication modules of a storage battery module in the storage battery system according to the present embodiment is described.

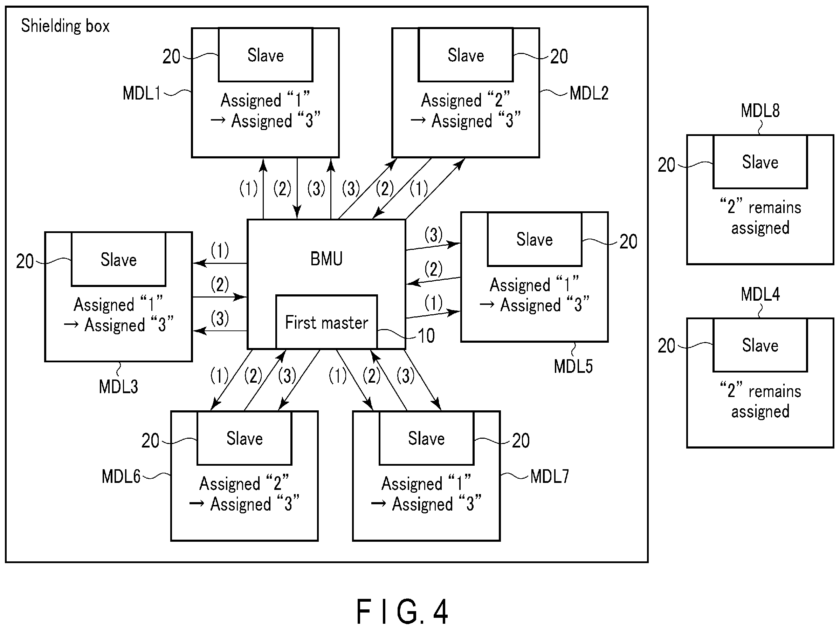

FIG. 4 is a diagram for explaining an example of an operation of changing a group of wireless communication modules of a storage battery module in the storage battery system according to the embodiment.

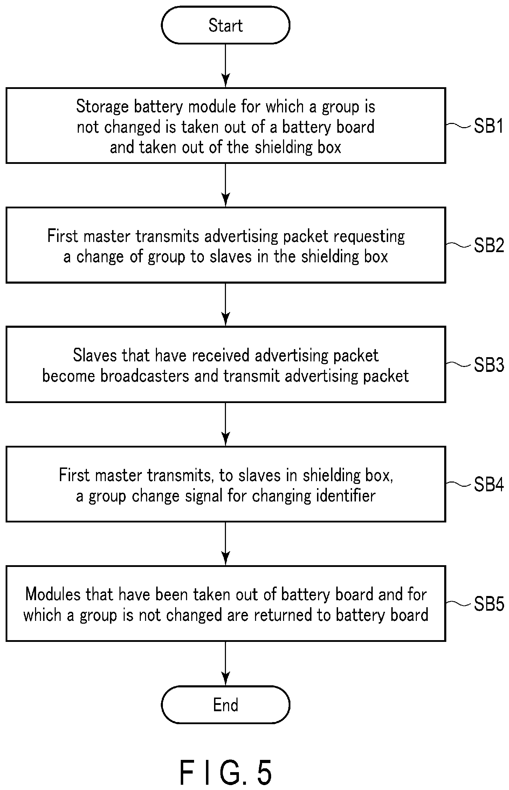

FIG. 5 is a flowchart illustrating an example of an operation of changing a group of wireless communication modules of a storage battery module in the storage battery system according to the embodiment.

Herein, an example of an operation of changing the identifier ("1" or "2") assigned to the wireless communication module 20 of each of the storage battery modules (slaves) MDL1, MDL2, MDL3, MDL5, MDL6, and MDL7 to the identifier "3" in the storage battery system accommodated in a shielding box is described.

When the group set to the plurality of wireless communication modules 20 is changed, of the storage battery modules MDL1 to MDLn, a module including the wireless communication module 20 whose group is not changed is taken out of a battery board, and is taken out of the shielding box (step SB1). In the example illustrated in FIG. 4, for example, the storage battery modules MDL1, MDL2, MDL3, MDL5, MDL6, and MDL7 are disposed inside the shielding box, and the storage battery modules MDL4 and MDL8 are disposed outside the shielding box.

The shielding box is formed of a material (for example, metal) capable of shielding radio waves of wireless communication between the inside and the outside of the box. Therefore, the packets transmitted by the first master 10 and the second master 11 of the battery management unit BMU accommodated in the shielding box do not reach the wireless communication module 20 outside the shielding box. Herein, an example of an operation of changing the group of the storage battery modules MDL1, MDL2, MDL3, MDL5, MDL6, and MDL7 by a packet transmitted from the first master 10 will be described. The shielding box may have a configuration capable of shielding radio waves between the wireless communication module 20 that changes the group and the wireless communication module 20 that does not change the group, and does not need to have a box shape. For example, a sheet or a wall capable of shielding radio waves may be used instead of the shielding box.

Subsequently, the following (1) to (3) are performed between the first master 10 and the wireless communication modules (slaves) of the storage battery modules MDL1, MDL2, MDL3, MDL5, MDL6, and MDL7 in the shielding box.
(1) The first master 10 transmits an advertising packet including an identifier of a predetermined value (step SB2). In the present embodiment, the identifier of the predetermined value is "0". The wireless communication module 20 that has received the advertising packet including the identifier "0" (an identifier having a predetermined value) becomes a broadcaster regardless of the value of the identifier assigned in advance.
   The advertising packet including the identifier "0" is received only by the slaves in the shielding box. When the slaves in the shielding box receive the advertising packet including the identifier "0", the slaves become a broadcaster.
(2) Subsequently, the slaves in the shielding box transmit an advertising packet to the three advertising channels at predetermined intervals (step SB3).
   The first master 10 sequentially receives the advertising packets transmitted from the slaves in the shielding box and specifies a communication partner by the advertising packets.
(3) Subsequently, the first master 10 transmits a group change signal for changing the currently set identifier to "3" to the specified slave, and changes the identifiers set to the slaves in the shielding box to "3" (step SB4). Thereafter, the first master 10 may notify the arithmetic processing device C1 that the change of group has been completed.

After the change of group is performed, the storage battery modules MDL4 and MDL8 taken out of the shielding box are accommodated in the shielding box (step SB5), and the battery management unit BMU and the storage battery modules MDL1 and MDL8 constitute a battery board, whereby the storage battery system can be operated.

According to the foregoing descriptions, for example, in a large-scale storage battery system, when it is necessary to change the identifiers preset in the storage battery modules MDL1 to MDLn, the identifiers of the plurality of wireless communication modules 20 can be collectively changed. Therefore, for example, when some malfunction or operational trouble occurs in the battery system, it is possible to smoothly continue the operation of the battery system by switching the group of some wireless communication modules 20, without stopping the battery system for a long time.

In other words, according to the present embodiment, it is possible to provide a storage battery system that shortens the standby time at the time of activation or maintenance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. These embodiments and modifications thereof are included in the scope and spirit of the invention, and are also included in the invention described in the claims and the scope equivalent thereto.

## Claims

1. A battery system comprising:
a plurality of storage battery modules, each comprising an assembled battery including a plurality of battery cells, a first wireless communication module configured to transmit and receive radio waves based on a BLE standard, and a battery monitoring unit configured to control operation of the first wireless communication module; and
a battery management unit comprising a plurality of second wireless communication modules configured to transmit and receive radio waves based on the BLE standard and an arithmetic processing device configured to control operation of the plurality of second wireless communication modules,
wherein a first identifier is preset in the first wireless communication module, and
when a connection is started between the second wireless communication module and the first wireless communication module, the first wireless communication module in which a value of a second identifier included in an advertising packet transmitted from the second wireless communication module is a value of the first identifier becomes a broadcaster and transmits the advertising packet.

2. The battery system according to claim 1,
wherein the first wireless communication module is configured to become a broadcaster regardless of a value of the first identifier when an advertising packet including the second identifier having a predetermined value is received, and
the second wireless communication module is configured to specify the first wireless communication module that is a communication partner by an advertising packet received after transmitting the advertising packet including the second identifier of the predetermined value, and transmit a signal requesting a change of the first identifier to the specified first wireless communication module.
